# EUROPÄISCHE PATENTANMELDUNG

(11) **EP 1 178 218 A1**
(43) Veröffentlichungstag der Anmeldung: **06.02.2002**
(21) Anmeldenummer: 01112344.5
(22) Anmeldetag: 21.05.2001
(51) Int. Cl.: F15B 1/26, F15B 21/04, B62D 5/06, B65D 51/16

(54) **Entlüftungsvorrichtung für einen Ölbehälter, insbesondere für hydraulische Lenksysteme von Kraftfahrzeugen**

(30) Priorität: 01.08.2000 DE 10037488
(71) Anmelder: ZF Lenksysteme GmbH, 73527 Schwäbisch Gmünd (DE)
(72) Erfinder: Burdiak, Johannes, 73529 Schwäbisch Gmünd (DE)

(57) **Zusammenfassung**

Eine Entlüftungsvorrichtung für einen ölbehälter, insbesondere für hydraulische Lenksysteme von Kraftfahrzeugen, weist einen von einem Deckel (1) verschlossenen Behältertopf auf. Der Deckel ist mit einem porösen Kunststoffeinsatz (2) versehen.

## Beschreibung

Die Erfindung betrifft eine Entlüftungsvorrichtung für einen Ölbehälter, insbesondere für hydraulische Lenksysteme von Kraftfahrzeugen, gemäß dem Oberbegriff von Anspruch 1.

Ein gattungsgemäßer Ölbehälter ist aus der DE 17 50 715 bekannt.

Der gattungsgemäße Ölbehälter weist einen Behältertopf auf, der von einem Deckel verschlossen ist. Im Inneren des Ölbehälters befindet sich in üblicher Weise eine Filtereinrichtung. Der Ölbehälter weist zum Zwecke der Entlüftung einen Deckeldom, einen Zwischendeckel und ein trichterförmiges Rohrstück auf, die labyrinthartig ineinander greifen und mit Öffnungen versehen sind, die dem Luftaustausch dienen.

Die für hydraulische Lenksysteme notwendige, sichere Entlüftung läßt sich durch das aus der DE 17 50 715 bekannte labyrinthartige Entlüftungssystem nur unzureichend realisieren. Zum einen ist ein derartiger Aufbau konstruktiv aufwendig und teuer, zum anderen läßt sich somit nicht verhindern, daß durch das labyrinthartige Entlüftungssystem ein Ölnebel austritt.

Ein weiterer Nachteil des bekannten Ölbehälters besteht darin, daß ein Eintreten von Wasser durch das labyrinthartige Entlüftungssystem nicht zuverlässig ausgeschlossen werden kann.

Aus der Praxis sind ebenfalls nur Ölbehälter bekannt, die über ein labyrinthartiges Entlüftungssystem verfügen und daher die oben genannten Nachteile aufweisen. Die Austrittsöffnung des Entlüftungssystemes kann dabei seitlich am Deckel angeordnet sein. Dies verringert zwar die Gefahr eines Wassereintrittes, ist jedoch konstruktiv aufwendig zu realisieren.

Zum allgemeinen Stand der Technik wird ferner auf die EP 0 859 657 B1 verwiesen.

Der vorliegenden Erfindung liegt daher die Aufgabe zugrunde, eine Entlüftungsvorrichtung für einen Ölbehälter, insbesondere für hydraulische Lenksysteme von Kraftfahrzeugen, zu schaffen, die eine zuverlässige, einfache und kostengünstige Entlüftung des Ölbehälters ermöglicht und ein Austreten von Öl bzw. Ölnebel und ein Eindringen von Wasser in den Ölbehälter zuverlässig verhindert.

Erfindungsgemäß wird diese Aufgabe durch den kennzeichnenden Teil von Anspruch 1 gelöst. Ein vorteilhafter Entlüftungseinsatz ist in Anspruch 13 dargestellt.

Dadurch, daß der Deckel mit einem porösen Kunststoffeinsatz versehen ist, wird eine zuverlässige Entlüftung des Ölbehälters gewährleistet. Durch den porösen Kunststoffeinsatz kann einerseits Luft aus dem Ölbehälter entweichen, andererseits wird aufgrund des Wasserrückhaltevermögens des porösen Kunststoffeinsatzes ein Eindringen von Wasser von außen in den Ölbehälter verhindert. Durch unterschiedliche Dichten des porösen Kunststoffeinsatzes können unterschiedliche Luftdurchgangswerte erreicht werden, wodurch der poröse Kunststoffeinsatz in der Lage ist, einen Ölnebel zurückzuhalten, und es kann kurzzeitig ein Überdruck im Ölbehälter aufgebaut werden.

Wie sich in Versuchen herausgestellt hat, ist der poröse Kunststoffeinsatz in vorteilhafter Weise in der Lage, auch größere Druckschwankungen ohne Beschädigungen zu überstehen. Der poröse Kunststoffeinsatz läßt sich in besonders einfacher und kostengünstiger Weise herstellen.

Das bisher in der Praxis auftretende Problem, daß, insbesondere in extremen Fahrsituationen, Öl bzw. ein Ölnebel aus der Entlüftungsöffnung austreten kann, wird somit zuverlässig und kostengünstig verhindert. Ein aufwendiger labyrinthartiger Aufbau des Entlüftungssystemes, das zudem nur eine unzureichende Entlüftung ermöglicht und ein Eindringen von Wasser bzw. ein Austreten von Öl nicht vermeiden kann, ist somit nicht notwendig. Der Ölbehälter bzw. der Deckel läßt sich konstruktiv besonders einfach und kostengünstig herstellen, da auf eine Vielzahl von unterschiedlichen Teilen verzichtet werden kann.

In einer konstruktiven Ausgestaltung der Erfindung kann vorgesehen sein, daß der Deckel eine an die Abmessungen des porösen Kunststoffeinsatzes angepaßte Aussparung aufweist, in die der poröse Kunststoffeinsatz einspritzbar ist.

In Versuchen hat sich herausgestellt, daß sich der poröse Kunststoffeinsatz in besonders einfacher Weise mit dem Deckel verbinden läßt, wenn der Kunststoffeinsatz in ein entsprechendes Werkzeug eingelegt wird. Durch ein Umspritzen mittels einem herkömmlichen Spritzwerkzeug entsteht eine zuverlässige Verbindung zwischen dem porösen Kunststoffeinsatz und dem Deckel. Der poröse Kunststoffeinsatz wird dabei nur soweit überspritzt, daß ein entsprechender Luftdurchgang des porösen Kunststoffeinsatzes freibleibt.

In besonders einfacher Weise wird der poröse Kunststoffeinsatz in ein entsprechendes Werkzeug eingelegt und direkt umspritzt.

Eine derartige Fertigung des Deckels mit dem porösen Kunststoffeinsatz hat sich in der Praxis als besonders einfach, kostengünstig und prozeßsicher zu handhaben herausgestellt.

Von Vorteil ist es, wenn der poröse Kunststoffeinsatz als poröse Kunststoffscheibe und diese als Sinterpille aus gesintertem PTFE ausgebildet ist.

Der Einsatz von gesintertem PTFE hat sich dabei als besonders vorteilhaft herausgestellt, da somit in einfacher Weise die gewünschten Luftdurchgangswerte erzielt werden und darüber hinaus ein Wasserrückhaltevermögen sichergestellt ist. Die Herstellung erfolgt dabei derart, daß die beim Sintervorgang als Ausgangsbasis vorliegenden Kügelchen unter Hitze und Druck zusammengeschweißt werden. Je höher dabei der Druck ist, desto geringer ist die Luftdurchlässigkeit der als Endprodukt vorliegenden Sinterpille.

In Versuchen hat sich herausgestellt, daß der Einsatz von PTFE hierfür besonders geeignet ist, da dieser Werkstoff zusätzlich zu den bekannten vorteilhaften Eigenschaften darüber hinaus eine gewisse Temperaturbeständigkeit aufweist, die speziell für den erfindungsgemäßen Einsatz vorteilhaft sind.

In einer Ausgestaltung der Erfindung kann ferner vorgesehen sein, daß die Aussparung zentrisch an einer Oberseite des Deckels angeordnet und der Deckel einteilig ausgebildet ist.

In Versuchen hat sich herausgestellt, daß sich eine zentrische Aussparung an der Oberseite des Deckels und eine einteilige Ausbildung desselben besonders einfach und kostengünstig realisieren läßt. Ein Ausformen ist somit in besonders vorteilhafter Weise möglich. Durch den Entfall des bisher aufwendigen und komplizierten, labyrinthartigen Entlüftungssystemes ist es möglich, den Deckel einteilig auszubilden. Die Sinterpille läßt sich dabei bereits während der Herstellung in den Dekkel integrieren. Der Deckel und somit der gesamte Ölbehälter läßt sich folglich erheblich günstiger und einfacher herstellen.

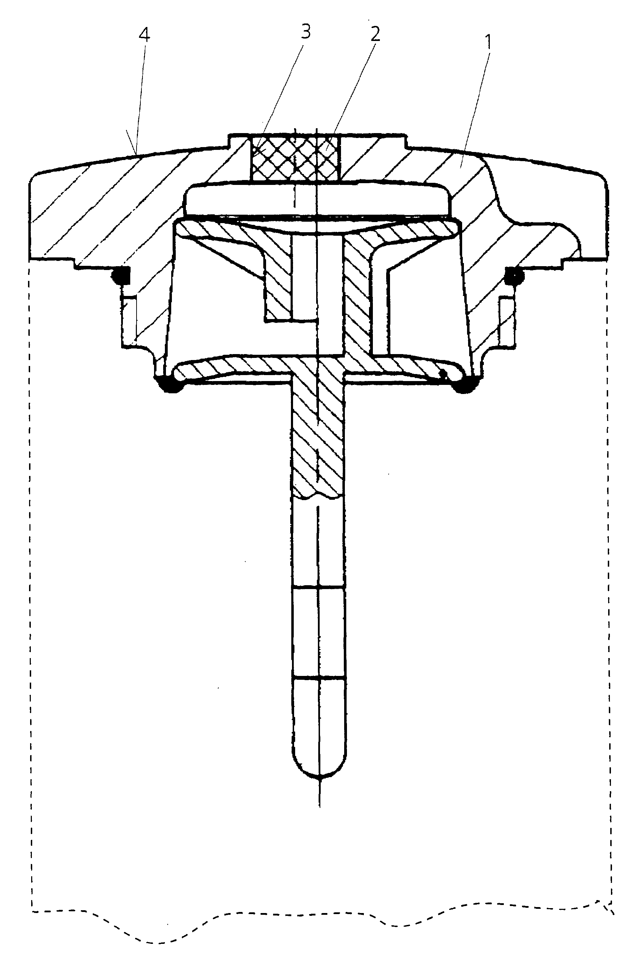

Vorteilhafte Ausgestaltungen der Erfindung ergeben sich aus den weiteren Unteransprüchen und aus dem nachfolgend anhand der Zeichnung prinzipmäßig dargestellten Ausführungsbeispiel.

Die einzige Figur der Zeichnung zeigt einen Schnitt durch einen Deckel eines Ölbehälters mit einem porösen Kunststoffeinsatz.

Die Figur zeigt einen Deckel 1 für einen herkömmlichen, bekannten und daher nur gestrichtelt teilweise dargestellten Behältertopf eines Ölbehälters, der zur Entlüftung des Ölbehälters mit einem porösen Kunststoffeinsatz 2 versehen ist. Der Deckel 1 ist dabei insbesondere für Ölbehälter für hydraulische Lenksysteme von Kraftfahrzeugen vorgesehen. Der Deckel 1 ist dabei prinzipiell von bekannter Bauart, wobei auf ein bisher übliches, labyrinthartiges Entlüftungssystem vollkommen verzichtet werden kann und der Deckel 1 darüber hinaus in besonders vorteilhafter Weise einstückig ausgebildet ist. Dies ermöglicht eine besonders kostengünstige Herstellung und einen stabilen sowie zuverlässigen Einsatz.

Ein prinzipieller Aufbau eines Ölbehälters, insbesondere für hydraulische Lenksysteme von Kraftfahrzeugen, ist beispielsweise aus der EP 0 859 657 B1 bekannt.

Da der Deckel 1 prinzipiell von bekanntem Aufbau ist, wird nachfolgend lediglich auf die erfindungsrelevanten Merkmale näher eingegangen.

In dem dargestellten Ausführungsbeispiel ist der poröse Kunststoffeinsatz als poröse Kunststoffscheibe und hierbei speziell als Sinterpille 2 ausgebildet. Die Sinterpille 2 besteht dabei aus eine PTFE-Werkstoff. Die Sinterpille 2 ist dabei aus gemahlenem Granulat gebildet, das beispielsweise in Form von Kügelchen vorliegt, wobei das Granulat unter Druck und Temperatur in einem Sintervorgang miteinander verbunden wird. Die unterschiedliche Dichte der Sinterpille 2, die für den Luftdurchgangswert maßgeblich ist, kann dabei in einfacher Weise durch die Größe und/oder die Feinheit des Granulats beeinflußt werden. Dabei wird beispielsweise durch einen entsprechend hohen Pressdruck die Luftdurchlässigkeit der Sinterpille 2 entsprechend gering. Die Eigenschaft der Sinterpille 2 entsprechend Luft durchzulassen, einen Ölnebel bzw. Öl zurückzuhalten und ein Eindringen von Wasser zu verhindern, läßt sich daher in besonders einfacher Weise durch das Granulat bzw. den Druck und die Temperatur des Sinterverfahrens bestimmen. Prinzipiell kann zum Sintern dabei ein Verfahren angewandt werden, das mit dem Sintern von Metall vergleichbar ist.

Die beim Sintern entstehenden Poren ermöglichen dabei die Luftdurchlässigkeit bzw. beeinflussen ebenfalls das Wasser- und Ölrückhaltevermögen der Sinterpille 2. Die Größe und die Feinheit des Granulats, d.h. die Aussiebmethode bzw. mit welcher Toleranz ausgesiebt wurde, bestimmt den Luftdurchgangswert und das Wasserrückhaltevermögen der fertigen Sinterpille 2.

Wie aus der Figur ersichtlich ist, weist der Deckel 1 eine an die Abmessung der Sinterpille 2 angepaßte Aussparung 3 auf, in die die Sinterpille 2 einsetzbar ist. Dabei kann die Sinterpille 2 in einer nicht dargestellten Ausführungsform beispielsweise in die Aussparung 3 eingepreßt werden. Dabei kann vorgesehen sein, daß die Sinterpille 2 an der dem Innenraum des Ölbehälters zugewandten Seite mit einem Absatz versehen ist. Durch diesen Absatz läßt sich die Sinterpille 2 in einfacher Weise in den Deckel 1 einpressen und entsprechend positionieren.

In Versuchen hat sich jedoch herausgestellt, daß sich der Deckel 1, wie im Ausführungsbeispiel dargestellt, in einfacher und kostengünstiger Weise mit der Sinterpille 2 versehen läßt, wenn diese in den Deckel 1 eingespritzt wird.

Ein Einspritzen der Sinterpille 2 in den Deckel 1 hat sich auch bezüglich der relativ großen Schwingbelastungen und der hohen Beschleunigungswerte als besonders vorteilhaft herausgestellt.

In besonders vorteilhafter Weise läßt sich der Deckel 1 mit der Sinterpille 2 versehen, wenn die Sinterpille 2 als direktes Einlegeteil in das Spritzgußwerkzeug zum Spritzen des Deckels 1 eingelegt wird. Somit wird in besonders einfacher und vorteilhafter Weise die Sinterpille 2 bereits bei der Herstellung des Deckels 1 in diesen integriert. Vorgesehen ist dabei, daß die Sinterpille 2 nur soweit umspritzt wird, daß ein entsprechend ausreichender Luftdurchgang frei bleibt. Der Deckel 1 kann dabei einteilig gespritzt werden. Wie sich in Versuchen herausgestellt hat, gewährleistet eine Sinterpille 2 mit einem Durchmesser von 4 mm bis 10 mm, vorzugsweise von 6 mm, eine ausreichende Luftdurchlässigkeit. Eine derartige Sinterpille 2 läßt sich konstruktiv besonders einfach in den Deckel 1 einsetzen, ohne daß dadurch das Spritzen des Deckels 1 erschwert wird.

Die Sinterpille 2 kann beispielsweise einen Luftdurchgangswert von 0,5 ml/min pro cm² aufweisen.

Ein besonderer Vorteil der Sinterpille 2 besteht auch darin, daß diese relativ robust gegen mechanische Einwirkungen ist und somit die Gefahr einer Beschädigung der Sinterpille 2 gering ist. Wie sich in Versuchen herausgestellt hat, muß die Sinterpille 2 daher nicht aufwendig vor Beschädigungen geschützt werden. Dies hat sich bezüglich der Herstellungskosten als besonders vorteilhaft herausgestellt.

Wie aus dem Ausführungsbeispiel ersichtlich ist, ist die Aussparung 3 bzw. die Sinterpille 2 zentrisch an einer Oberseite 4 des Deckels 1 angeordnet. Wie sich in Versuchen herausgestellt hat, läßt sich eine derartige Anordnung bezüglich der Ausformung konstruktiv besonders einfach und kostengünstig herstellen. Eine andere Positionierung der Aussparung 3 bzw. der Sinterpille 2 (beispielsweise seitlich am Deckel 1) ist zwar möglich, jedoch konstruktiv aufwendiger.

Ein Verstopfen der Sinterpille 2 durch einen Ölnebel wird zuverlässig dadurch verhindert, daß durch einen entsprechenden Überdruck die Ölteilchen in Form von Blasen durch die Sinterpille 2 gepreßt werden. Somit reinigt sich die Sinterpille 2 selbständig von Verstopfungen.

Selbstverständlich lassen sich auch andere Kunststoffe zur Herstellung der porösen Sinterpille 2 verwenden, allerdings hat sich insbesondere bezüglich der Temperaturbeständigkeit PTFE von den bekannten Kunststoffen als am geeignetsten herausgestellt.

## Patentansprüche

1. Entlüftungsvorrichtung für einen Ölbehälter, insbesondere für hydraulische Lenksysteme von Kraftfahrzeugen, wobei der Ölbehälter einen von einem Deckel verschlossenen Behältertopf aufweist,
**dadurch gekennzeichnet, daß**
der Deckel (1) mit einem porösen Kunststoffeinsatz (2) versehen ist.

2. Entlüftungsvorrichtung für einen Ölbehälter nach Anspruch 1,
**dadurch gekennzeichnet, daß**
der Deckel (1) eine an die Abmessungen des porösen Kunststoffeinsatzes (2) angepaßte Aussparung (3) aufweist, in die der poröse Kunststoffeinsatz (2) einsetzbar ist.

3. Entlüftungsvorrichtung für einen Ölbehälter nach Anspruch 2,
**dadurch gekennzeichnet, daß**
der poröse Kunststoffeinsatz (2) in die Aussparung (3) einspritzbar ist.

4. Entlüftungsvorrichtung für einen Ölbehälter nach Anspruch 2,
**dadurch gekennzeichnet, daß**
der poröse Kunststoffeinsatz (2) in die Aussparung (3) einpreßbar ist.

5. Entlüftungsvorrichtung für einen Ölbehälter nach einem der Ansprüche 1 bis 4,
**dadurch gekennzeichnet, daß**
der poröse Kunststoffeinsatz als poröse Kunststoffscheibe (2) ausgebildet ist.

6. Entlüftungsvorrichtung für einen Ölbehälter nach einem der Ansprüche 1 bis 5,
**dadurch gekennzeichnet, daß**
der poröse Kunststoffeinsatz (2) aus PTFE besteht.

7. Entlüftungsvorrichtung für einen Ölbehälter nach Anspruch 5 und 6,
**dadurch gekennzeichnet, daß**
die poröse Kunststoffscheibe als Sinterpille (2) aus gesintertem PTFE ausgebildet ist.

8. Entlüftungsvorrichtung für einen Ölbehälter nach Anspruch 7,
**dadurch gekennzeichnet, daß**
die Sinterpille (2) aus gemahlenem Granulat gebildet ist, das unter Druck und Temperatur in einem Sintervorgang miteinander verbindbar ist.

9. Entlüftungsvorrichtung für einen Ölbehälter nach Anspruch 7 oder 8,
**dadurch gekennzeichnet, daß**
die Sinterpille (2) einen Durchmesser von 4 mm bis 10 mm, vorzugsweise 6 mm, aufweist.

10. Entlüftungsvorrichtung für einen Ölbehälter nach Anspruch 7, 8 oder 9,
**dadurch gekennzeichnet, daß**
die Luftdurchgangswerte und/oder das Wasserrückhaltevermögen der Sinterpille (2) durch die Größe und/oder die Feinheit des Granulats beeinflußbar ist.

11. Entlüftungsvorrichtung für einen Ölbehälter nach einem der Ansprüche 1 bis 10,
**dadurch gekennzeichnet, daß**
die Aussparung (3) zentrisch oder kozentrisch an einer Oberseite (4) des Deckels (1) angeordnet ist.

12. Entlüftungsvorrichtung für einen Ölbehälter nach einem der Ansprüche 1 bis 11,
**dadurch gekennzeichnet, daß**
der Deckel (1) einteilig ausgebildet ist.

13. Entlüftungseinsatz zum Einsetzen in einer Aussparung eines Deckels eines Behältertopfes eines Ölbehälters, insbesondere für hydraulische Lenksysteme von Kraftfahrzeugen,
**dadurch gekennzeichnet, daß**
der Entlüftungseinsatz als Sinterpille (2) ausgebildet ist, wobei die Sinterpille (2) unter Druck und Temperatur in einem Sintervorgang aus gemahlenem Granulat bildbar ist.

14. Entlüftungseinsatz nach Anspruch 13,
**dadurch gekennzeichnet, daß**
als Granulat PTFE vorgesehen ist.
